# EUROPÄISCHE PATENTSCHRIFT

(11) **EP 3 014 970 B1**
(45) Veröffentlichungstag und Bekanntmachung des Hinweises auf die Patenterteilung: **27.02.2019**
(21) Anmeldenummer: 15003006.2
(22) Anmeldetag: 21.10.2015
(51) Int. Cl.: A01D 17/10, A01D 33/08

(54) **HACKFRUCHTERNTEMASCHINE**
ROOT CROP HARVESTER
MACHINE DE RECOLTE DE TUBERCULES

(30) Priorität: 28.10.2014 DE 102014015835
(43) Veröffentlichungstag der Anmeldung: 04.05.2016
(73) Patentinhaber: Grimme Landmaschinenfabrik GmbH & Co. KG, 49401 Damme (DE)
(72) Erfinder: DETTMER, Franz-Josef, 49577 Ankum (DE); BELLERSEN, Werner, 49393 Lohne (DE)
(74) Vertreter: Pott, Ulrich

(56) Entgegenhaltungen:
- DE-A1-102007 034 446
- DE-B- 1 224 079
- DE-C2- 3 235 087
- DE-U1- 8 809 672

## Beschreibung

Die Erfindung betrifft eine Maschine zum Ernten von Hackfrüchten, insbesondere in Form einer als selbstfahrender Kartoffelroder ausgebildeten Kartoffelvollerntemaschine oder einer stationären Reinigungsmaschine gemäß dem Oberbegriff des Anspruchs 1.

Seit langem sind Maschinen zum Ernten und Verarbeiten von Hackfrüchten, insbesondere Kartoffeln, in unterschiedlichen Ausführungen von gezogenen Aggregaten oder selbstfahrenden Maschinen bekannt. Bei derartigen Maschinenkonzepten werden jeweils mehrere Reihen des Erntegutes mit Beimengungen vom Ackerboden aufnehmende Rodeeinrichtungen im Zusammenhang mit einem nachfolgenden Förder- und Reinigungssystem genutzt. In DE 32 35 087 C2 (/; 1) ist eine derartige Konstruktion mit einer von einem Traktor gezogenen Hackfruchterntemaschine dargestellt.

Auch bei einer Kartoffelvollerntemaschine gemäß DE 93 20 575.9 U1 (/; 2) ist ausgehend von einer mit Rodescharen versehenen Aufnahmevorrichtung ein nachfolgendes Siebförderband vorgesehen, mit dem das Erntegut und die Beimengungen einer nächsten Reinigungsstufe zugeführt werden.

Eine komplexere Ausführung einer gezogenen Kartoffelerntemaschine gemäß DE 10 2007 034 446 A1 (/; 3) woraus der Oberbegriff von Anspruch 1 hervorgeht, weist ebenfalls nachgeordnet einer Rodeeinrichtung einen ersten Längsförderer auf, der im Verbund mit einer in der gleichen Rahmenkonstruktion gehaltenen zweiten Siebbandstufe wirksam ist. Dabei ist - ausgehend von einer eine Bandüberdeckung aufweisenden Übergabezone - eine Hochförderung des Gemisches vorgesehen. Dabei sind sämtliche der Förder- und Reinigungsbaugruppen an einer weitgehend geschlossenen Rahmenkonstruktion der Maschine gehalten, so dass eine lineare Verlagerung zu einem oberen Umlenk- und Sortierbereich hin erfolgt.

Bei einem Lade- und Reinigungsgerät gemäß DE 88 09 672.6 U1 wird der breitflächig aufgenommene Förderstrom zentral verengt einer linearen Förderstrecke übergeben und quer zu dieser einem seitlichen Übergabeförderer zugeführt. In diesen Bereichen ist das Erntegut bereits von den Beimengungen getrennt, so dass für deren Abtransport aus der verengten Zone weitere Trennbaugruppen - die bei der Feldarbeit erforderlich sind - bei diesem System entbehrlich sind.

Eine ähnliche Konstruktion ist bei einer selbstfahrenden Kartoffelvollerntemaschine vorgesehen (Prospekt "SF 150/170-60" der Firma Grimme Landmaschinenfabrik GmbH & Co. KG, Damme, Veröffentlichungsnummer: L05.0851.DE04/08/2000; 2008) (/;4), wobei eine das Erntegut aufnehmende erste Reinigungseinheit mit Aufnahmeband sowie einem ersten Siebband und eine zweite Reinigungseinheit mit einem zweiten Siebband in einer linearen Abfolge als Förderbaugruppen hintereinander angeordnet sind.

Bei der technischen Weiterentwicklung derartiger Erntemaschinen für Hackfrüchte werden zur Verbesserung der Reinigungs- und Sortierbedingungen jeweilige, dem vorderen Aufnahme- und Reinigungssystem nachgeordnete Komponenten des Förderkomplexes oder jeweilige, zur manuellen Sortierung vorgesehene Bandbaugruppen - beispielsweise im Bereich von Übergabeförderbändern - durch größere Baugruppen ersetzt, die in Bezug auf den Maschinenrahmen einen seitlichen Überstand verursachen können. Damit ist gleichzeitig die Handhabbarkeit des entlang der Feldkontur zu steuernden Systems beeinflusst, da die Durchführung eines kompletten Rodevorgangs insbesondere im Nahbereich jeweiliger Randzonen des Feldes durch überragende Bauteile der Maschine beeinflusst sein kann und damit Ernteverlusten eintreten können. Bei dem bisherigen Konzept (gemäß /; 4) der selbstfahrenden Kartoffelvollerntemaschinen ist die Lenk- und Antriebseinheit vorlaufend dem Aufnahmesystem für das Erntegut angeordnet, so dass eine entsprechende Länge der Maschine beachtlich ist.

Die Erfindung befasst sich mit dem Problem, eine Maschine zum Ernten von Hackfrüchten, insbesondere in Form einer Kartoffelvollerntemaschine zu schaffen, die mit geringem technischem Aufwand als kompakte Einheit auch für mehr als zwei Rodedämme einsetzbar ist, bei optimierbarem Rodevorgang eine Steigerung der Ernteleistung ermöglicht und im Bereich der Förder- und Verteilbaugruppen eine an die zur Straßenfahrt vorgesehene Fahrbreite anpassbare Bedienstruktur aufweist.

Die Erfindung löst diese Aufgabe mit einer Maschine mit den Merkmalen des Anspruchs 1. Wesentliche weitere Ausgestaltungen ergeben sich aus den Ansprüchen 2 bis 26.

Hackfruchterntemaschinen sind in Form von gezogenen oder selbstfahrenden Kartoffelrodern oder auch als stationäre Reinigungsmaschinen bekannt. Die auf dem Erntefeld einsetzbaren Maschinen weisen dabei im vorderen Bereich ihres Maschinenrahmens eine Rodevorrichtung auf, mittels der das Erntegut über Fördereinrichtungen entlang einer Sortierstrecke in einen Sammelbunker oder einen Überlader verlagert wird. Dabei werden insbesondere auf ansteigenden Bandbaugruppen verlagerbare Fördertrums zur Überwindung unterschiedlicher und die notwendige Verteillänge aufweisender Förder- und Sortierstrecken genutzt.

Bei dem erfindungsgemäß verbesserten Konzept einer derartigen Maschine ist vorgesehen, dass dessen im ersten Aufnahmebereich nahe dem Rodevorgang ansetzender und eine ansteigende Sortierstrecke bildender Fördertrum im Bereich seines oberen Abförderendes so ausrichtbar ist, dass der zumindest eine Fördergutstrom auf eine in die Maschinenstruktur integrierte Umlenkfördereinheit mit jeweiligen verlagerbaren und in verschiedenen Positionen nutzbaren Bandabschnitten gelenkt wird.

Diese als kompakte Basisbaugruppe des neuen Maschinenkonzeptes vorgesehene Umlenkfördereinheit ist so ausgebildet, dass mit dieser zumindest ein im Wesentlichen quer zur Zuführrichtung erfassbarer Teilförderstrom gebildet werden kann. Ausgehend von diesem Teilförderstrom wird das im Bereich des ersten Fördertrums herangeführte Erntegut mit an sich bekannten Förderelementen verlagert und dabei dem Bereich zumindest eines hinteren Abförderers zugeführt.

Damit wird im Bereich der oberen Umlenkfördereinheit ein optimierbares Aggregate-Systems bereitgestellt, mit dem variable Ausführungen von an sich bekannten Trenn- und/oder Sortiergeräten für eine gesteuerte Umlenk-Sortier-Verarbeitung auf engem Raum zusammengeführt sind. Diese funktionale Einheit ist vorteilhaft so aufgebaut, dass in deren Feld-Arbeitsposition jeweilige Baugruppen zumindest einseitig über eine - die Fahrbreite der Maschine bestimmende - Aufnahmebreite der Maschine überstehen können. Die Umlenkfördereinheit ist so aufgebaut, dass die seitlich überstehenden Baugruppen aus dieser Lage in eine zur Straßenfahrt nutzbare Fahrposition rückführbar abgestützt sind.

Es hat sich gezeigt, dass für insbesondere eine denkbare maximale Aufnahmebreite - hier: entsprechend einer Fahrbreite von 3 m - definierende Kartoffelernter in Selbstfahrer-Ausführung das Konzept mit der "verlagerbaren" Umlenkfördereinheit in den Maschinenrahmen optimal integriert werden kann. Dabei wird durch effektiv anpassbare Führungen im Bereich eines an den Rodevorgang anschließenden Grobkraut-Bandes und eines Erntegut-Bandes eine Weiterleitung der Fördergüter auf einer geringen Raum erfordernden Sortierstrecke definierbar, derart, dass - bei insgesamt verkürzbarer Maschinenlänge - eine qualitätsgerechte Trennung von Beimengungen aus dem Erntegut möglich ist.

Die für eine Auflockerung und Sortierung von Erntegut zwingend erforderlichen "Bandlängen" werden im Bereich der "mehrspurigen" Umlenkfördereinheit an ein entsprechend der vergrößerten Aufnahmebreite ansteigendes Fördervolumen angepasst. Diese Förderbaugruppen sind variabel gestaltbar, insbesondere derart, dass die in eine jeweilige Arbeitsposition ausfahrbaren Trenngeräte der Umlenkfördereinheit einen seitlichen Freiraum neben der Maschine einnehmen können. Nach dieser Feld-Nutzung mit Ausfahrstellung ist für eine nachfolgende Straßenfahrt eine steuerbare "automatische" Zurückbewegung vorgesehen. Dabei werden die verlagerbaren Komponenten in eine kompakte - insbesondere die Drei-Meter-Fahrbreite nicht übersteigende - Nichtgebrauchsstellung (mit Sondergenehmigungen: 3,30 m Fahrbreite möglich) bewegt und fahrsicher im Bereich des Maschinenrahmens fixiert. Denkbar ist auch, dass die einstellbare Umlenkfördereinheit mit einer Rodeeinrichtung kombiniert wird, die ihrerseits durch verlagerbare Rode-Bauteile bei der Feldarbeit die Drei-Meter-Fahrbreite überragen kann und danach diese Rode-Bauteile auf das "Normmaß" zurückbewegt werden.

Es versteht sich, dass die der Reinigungs- und Sortierstrecke vorgelagerte Rodevorrichtung vorzugsweise mit einer im Wesentlichen der zur Straßenbreite der Maschine entsprechenden Aufnahmebreite ausgebildet werden kann. Die Kombination der nachfolgenden Bauteile im Bereich der Umlenkfördereinheit sieht vor, dass ausgehend von bereits bekannten Vier-Reihen-Maschinen nunmehr eine Konstruktion mit "außen liegenden Trenngeräten" aufgebaut werden kann.

Dabei wird eine vergleichsweise einfach aufgebaute erste Förderstrecke mit aufsteigendem Fördertrum mit der, vorzugsweise zwei Teilströme bildenden Umlenkfördereinheit im Bereich von zwei Trenngeräten zusammengeführt. Damit wird erreicht, dass das auf der Sortierstrecke vorgereinigte und breitflächig mit zumindest einem Siebband herangeführte Fördergut in Form der Hackfrüchte im Bereich der Umlenkfördereinheit auf die zwei, einen jeweiligen Teilstrom bildenden Trenngeräte optimal verteilt wird. Damit ist auch bei großvolumigem Förderstrom eine maximale Förder-, Reinigungs- und Durchsatzleistung des Systems gewährleistet.

Es hat sich gezeigt, dass die erfindungsgemäße Umlenkfördereinheit eine optimale Trennung der zwei Teilströme des Erntegutes ermöglicht, dieses auf den jeweiligen Teilförderstrecken optimal zur Nachsortierung verlagert wird und das von Beimengungen freie Erntegut anschließend an die beiden Teilförderstrecken für den Abtransport gesammelt bzw. zusammengeführt werden kann.

Dabei wird die Umlenkfördereinheit im Bereich der vorgeordneten aufsteigenden Förderstrecke vorteilhaft mit einem Erntegut und Beimengungen trennenden Zwei-Band-System kombiniert. Mit dieser "doppellagigen" Förderung können - auf vergleichsweise engem Raum - auch jeweilige, in eine obere Abwurfzone gelangende Beimengungen optimal aus dem Sortiersystem ausgeleitet werden. Die Bandführung ist dabei so ausgelegt, dass die Umlenkfördereinheit mit geringem Aufwand "umfördert" wird und damit gegenseitige Beeinflussungen der Förderstrecken vermieden sind.

Die konstruktiv anpassbare Gestaltung der insbesondere zwei Trenngeräte der Umlenkfördereinheit sieht vor, dass diese im Bereich der Erntegut-Übernahme jeweilige von der Maschinenlängsmittelebene im Wesentlichen entgegengesetzt nach außen gerichtete Teilförderstrecken bilden. Denkbar ist auch, dass spitzwinklig geneigte Förderstrecken vorgesehen sind. Insbesondere sieht das System vor, dass ausgehend von den nach außen gerichteten Teilförderstrecken anschließend zumindest bereichsweise eine Parallelförderung des Erntegutes zum hinteren Bereich der Maschine erfolgt, in diesen Förderphasen weitere Verunreinigungen aus den Erntegutströmen entfernt werden können und diese dann im Bereich vor einem Bunker o. dgl. wieder zusammengeführt werden.

Die konstruktiv variabel gestaltbaren Trenngeräte sind dabei so konzipiert, dass zumindest jeweilige Teil-Baugruppen mittels einer einen hydraulischen und/oder motorischen Stellantrieb aufweisenden Stellbaugruppe in die jeweils vorgesehene Nutz- bzw. Fahrstellung verlagerbar sind.

Eine konstruktive Optimierung der wahlweise als Schwenk-, Klapp - und/oder Schubkonstruktion ausgebildeten Bauteilverbindungen im Bereich der beiden seitlichen Trenngeräte sieht vor, dass diese im Bereich der abgewinkelten bzw. randparallelen Förderabschnitte jeweils als ein zweiteiliges System ausgebildet werden. Durch diese funktional in der Arbeitsstellung zusammenwirkenden Teil-Baugruppen wird eine Struktur geschaffen, bei der ein an die Stellmöglichkeiten anpassbares Gewicht sowie eine aufgeteilte Größe die Handhabung beim Verlagern in die Nichtgebrauchslage verbessern.

Entsprechend dem zu verarbeitenden Förderstrom des Erntegutes weisen die beiden Trenngeräte jeweils eine vordere Aufnahmeschwenkeinheit und eine nachgeordnete Abförderschwenkeinheit als die beiden Teil-Baugruppen der Förderstrecke auf.

Diese Komplettierung der Umlenkfördereinheit sieht vor, dass die jeweils einen der Teilströme aufnehmenden Trenngeräte im Bereich der Zwei-Einheiten-Stellbaugruppe mit spiegelbildlich angeordneten Bauteilen ausgebildet werden und diese ausgehend von der Längsmittelebene jeweils randseitig optimal in den Maschinenrahmen integrierbar sind.

Vorteilhaft ist die Aufnahmeschwenkeinheit des jeweiligen Trenngerätes mit einem äußeren Rahmenabschnitt versehen, wobei dieser zumindest eine Leitwalze sowie ein Überleitband aufweist. Die so konzipierte Baugruppe kann insgesamt um eine zur Längsmittelebene der Maschine parallele sowie insbesondere horizontale Schwenkachse verlagert werden. Dabei ist die Aufnahmeschwenkeinheit im Bereich des mehrere Rahmenabschnitte aufweisenden Stützrahmens mit einem über Umlenkrollen geführten Förderband versehen. Ebenso ist denkbar, dass die Aufnahmeschwenkeinheit im Bereich des Stützrahmens mehr als zwei Rahmenabschnitte aufweist und damit ein erweiterbares System für den Transport des Erntegutes gebildet werden kann.

Die im Bereich des Stützrahmens verlagerbaren Rahmenabschnitte der Aufnahmeschwenkeinheit sind in ihrer Stützkonstruktion variabel auslegbar, wobei denkbar ist, dass durch Zusammenschieben, -legen und/der -klappen das jeweilige, zur Straßenfahrt erforderliche Breitenmaß - wahlweise im Bereich der Trenngeräte bzw. des jeweiligen Stützrahmens - herstellbar ist.

Für das optimale Zusammenspiel von zugeführtem Erntegutstrom und vorbeschriebenen Trenngeräten sind diese ausgehend von der Aufnahmeschwenkeinheit mit einer an dieser anschließenden Abförderschwenkeinheit versehen. Diese ebenfalls autark bewegliche zweite Teil-Baugruppe des jeweiligen Trenngerätes ist vorzugsweise mit zumindest einem parallel zur Maschinenlängsmittelebene verlaufenden sowie das Erntegut von der Aufnahmeschwenkeinheit übernehmenden Übernahmeband versehen, das mit einem diesem mit Winkelversatz zur Maschinenlängsmittelebene hin zugeordneten Überleitband zusammenwirkt. Dabei ist das Übernahmeband so angeordnet, dass von diesem aus am Abförderende das Erntegut mit zumindest einer Leitwalze als Querförderer zum Überleitband lenkbar ist.

Die optimale Schwenkkonstruktion dieser Abförderschwenkeinheit sieht vor, dass das Übernahmeband und das als Querförderer wirkende Überleitband als gemeinsam verlagerbare Baugruppe im Maschinenrahmen abgestützt sind. Ebenso ist denkbar, diese Baugruppen mit separaten Stellgliedern auszurüsten und damit eine Einzelverlagerung vorzusehen.

Ausgehend von dem vorbeschriebenen System der Erntegut-Verlagerung mittels der Aufnahme- und Abförderschwenkeinheiten wirkt die diese aufweisende und weitgehend zentral im oberen Bereich des Maschinenrahmens gehaltene Umlenkfördereinheit auch mit den Baugruppen zur Beimengungen-Verlagerung optimal zusammen. Dabei wird - weitgehend synchron zur Teilstrombildung im Bereich des Erntegutstromes - die üblicherweise vorgesehene Verlagerung von Beimengungen, Kraut u. dgl. Reststoffen im System realisiert. Das mittels eines Krautbandes hochgeführte Fördergut wird anschließend an das im Wesentlichen parallel zum Erntegut-Strom ansteigende Fördertrum entlang eines waagerechten oberen Teilbereiches über die Trenngeräte der Umlenkfördereinheit hinweg verlagert, so dass Krautbestandteile o. dgl. Fördergüter in eine oben liegende Zone der Maschine gelangen. Ausgehend von dieser - als effektive Abwurfzone für die Reststoffe nutzbaren - Förderlage wird das Krautband so geführt, dass dieses einen im Wesentlichen vertikal nach unten umgelenkten Rückführtrum bildet und in diesem Bereich auch eine gesteuert beeinflussbare Verlagerung der Reststoffe möglich ist.

Aus einer Zusammenschau dieser an den Rodevorgang unmittelbar anschließenden Fördersituation ergibt sich, dass vorzugsweise ein Krautband und ein das Erntegut aufnehmendes Siebband als eine doppellagige Reinigungsstruktur zumindest im ansteigenden Teilbereich der Förderstrecke zusammenwirken. Dabei ist das Förderkonzept so ausgeführt, dass das Krautband im Bereich der ansteigenden Reinigungsstrecke mit parallelem Abstand über dem Erntegutstrom des Siebbandes zu der oberen Abwurfzone hin verläuft.

Ausgehend von der Wirkung des in die obere Abwurfzone geführten Krautbandes ist vorgesehen, dass dessen Rückführtrum so geleitet wird, dass dieses zumindest bereichsweise einen insbesondere im Bereich der Umlenkfördereinheit gebildeten Fallraum für die Beimengungen durchgreifen kann. Dieser Fallraum kann dabei auch hinter den beiden spiegelsymmetrisch angeordneten Trenngeräten vorgesehen sein. Damit wird deutlich, dass der mit dem Krautband zusammenwirkende Fallraum einen zentral in der Maschine angeordneten Schachtbereich definiert, dessen oberseitiger Umfangsrand von den Baugruppen der Trenngeräte begrenzt wird. Die die Umlenkfördereinheit bildenden Trenngeräte können dabei vorzugsweise - in Förderrichtung des Siebbandes - vor dem Fallraum angeordnet sein.

Eine konstruktive Variante des vorbeschriebenen Maschinenkonzeptes sieht vor, dass diese im Bereich der Umlenkfördereinheit auch mit mehr als zwei Trenngeräten versehen sein kann.

Die konstruktive Gestaltung der Umlenkfördereinheit im Bereich der beiden Trenngeräte sieht vor, dass hier jeweilige variable Band- und/oder Sieb-Konstruktionen als verlagerbare "Seitenförderer" die Aufnahmeschwenkeinheit und die Abförderschwenkeinheit bilden können. Von diesen aus kann der jeweilige Teilstrom des Erntegutes in Winkellage zur bzw. entgegen der Fahrtrichtung verlagert werden, und dann wird endseitig ein auf dem Abförderer dem Sammelbunker zugeführter Förderstrom aus beiden Teilförderströmen gebildet.

Der Abförderer kann dabei insbesondere eine geringere Förderbreite als das vordere Siebband aufweisen, und im Bereich der "Seitenförderer" können die jeweils in Richtung des Abförderers wirkenden hinteren Querförderer auch als "Sortierbaugruppen" zum Abscheiden von Steinen oder Kluten aus dem Erntegut vorgesehen sein.

Die konstruktive Anpassung des vorbeschriebenen Systems an unterschiedliche Maschinenkonfigurationen sieht auch die Möglichkeit vor, dass die Umlenkfördereinheit an Stelle der "spiegelsymmetrischen Anordnung" von zwei, mit jeweiliger Aufnahmeschwenkeinheit und Abförderschwenkeinheit versehenen Trenngeräten auch nur eine "einseitig" zur Maschinenlängsmittelebene wirksame Trenn- und Leitbaugruppe aufweisen kann.

Weitere Einzelheiten und vorteilhafte Ausgestaltungen der Erfindung sind in der Zeichnung dargestellt und werden nachfolgend näher beschrieben. In der Zeichnung zeigen:
- Fig. 1: eine perspektivische Gesamtansicht der Hackfruchterntemaschine in Form eines Kartoffelroders beim Feldeinsatz,
- Fig. 2: eine Draufsicht der Basiskonstruktion des erfindungsgemäßen Maschinenkonzeptes mit Bauteilen einer zentralen Umlenkfördereinheit in Arbeitsstellung,
- Fig. 3: eine Draufsicht ähnlich Fig. 2 mit den Bauteilen im Bereich der Umlenkfördereinheit in Straßen-Fahrstellung der Maschine,
- Fig. 4: eine vergrößerte Einzeldarstellung einer das Fördergut im Bereich der Umlenkfördereinheit übernehmenden und als Aufnahmeschwenkeinheit wirksamen Trennbaugruppe in Arbeitsposition,
- Fig. 5: die Aufnahmeschwenkeinheit gemäß Fig. 4 in eingeschwenkter Fahrstellung,
- Fig. 6: eine vergrößerte Einzeldarstellung einer zweiten Baugruppe des Trenngerätes in Form einer Abförderschwenkeinheit, die im Bereich einer nachgeordneten Sortierstrecke vor der Überleitung in einen Sammelbunker angeordnet ist,
- Fig. 7: eine Prinzipdarstellung ähnlich Fig. 6 mit der Abförderschwenkeinheit in eingeklappter Fahrposition,
- Fig. 8: eine Prinzipdarstellung jeweiliger Förderstrecken des Systems in Seitenansicht,
- Fig. 9: eine Draufsicht des Förderprinzips für den Erntegutstrom zum Bereich der Umlenkfördereinheit mit zwei Trenngeräten,
- Fig. 10: eine Draufsicht ähnlich Fig. 9 mit nur einem der Trenngeräte im Bereich der Umlenkfördereinheit,
- Fig. 11: eine Perspektivdarstellung des Förderprinzips gemäß Fig. 9 mit der Maschine in Arbeitsposition,
- Fig. 12: eine Prinzipdarstellung des Fördersystems gemäß Fig. 10 mit nur einem Trenngerät,
- Fig. 13: eine Draufsicht auf die Förderstrecken der konstruktive Details aufweisenden Maschine ähnlich Fig. 1,
- Fig. 14: eine Seitenansicht der jeweiligen Förderströme von Erntegut und Beimengungen bei dem Maschinenkonzept gemäß Fig. 13,
- Fig. 15: eine vergrößerte Ausschnittsdarstellung im Bereich des ansteigenden Fördertrums der Maschine gemäß Fig. 14,
- Fig. 16: eine Seitenansicht des erfindungsgemäßen Maschinenkonzeptes mit Prinzipdarstellung der Förderwege im Bereich des Maschinenrahmens mit Führerkabine und Sammelbunker, und
- Fig. 17: eine Draufsicht der Maschine gemäß Fig. 1 bzw. Fig. 16 bei einer Arbeitsposition mit in "Hundegang-Stellung" verschwenkten Baugruppen im Bereich hinter den Rodeelementen.

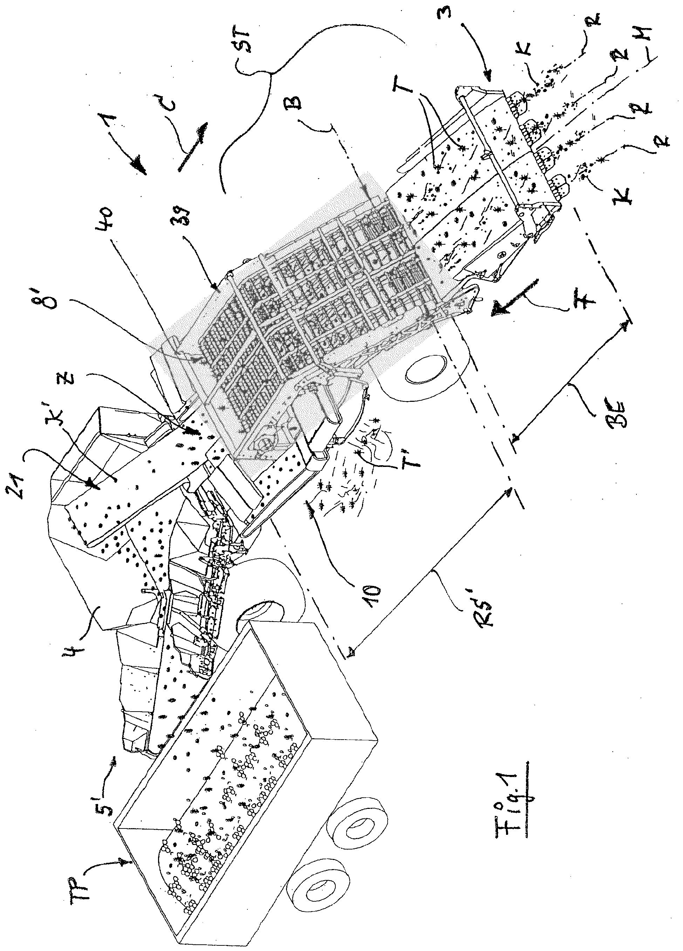

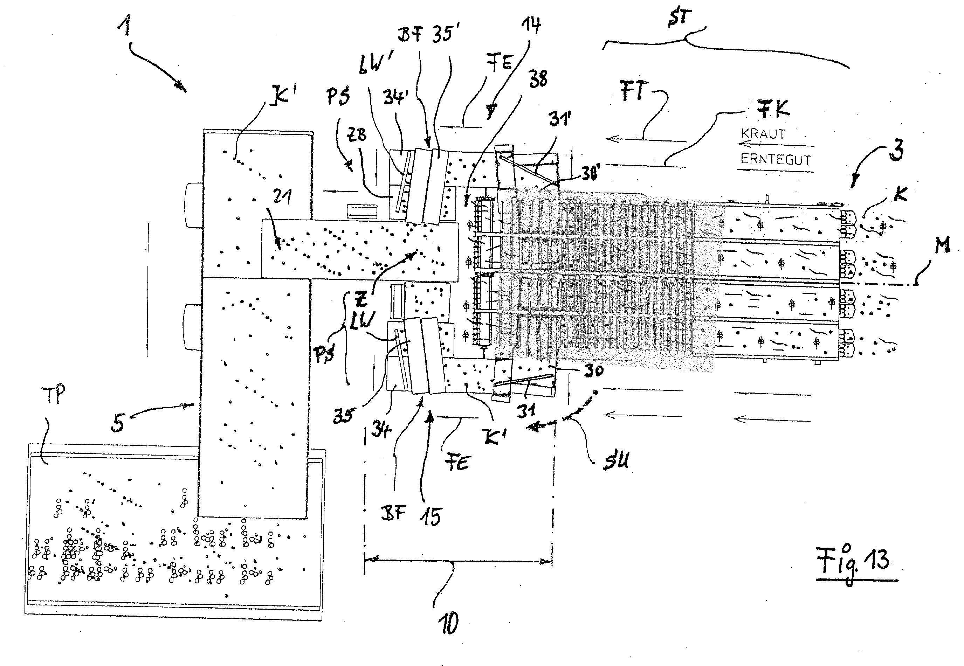

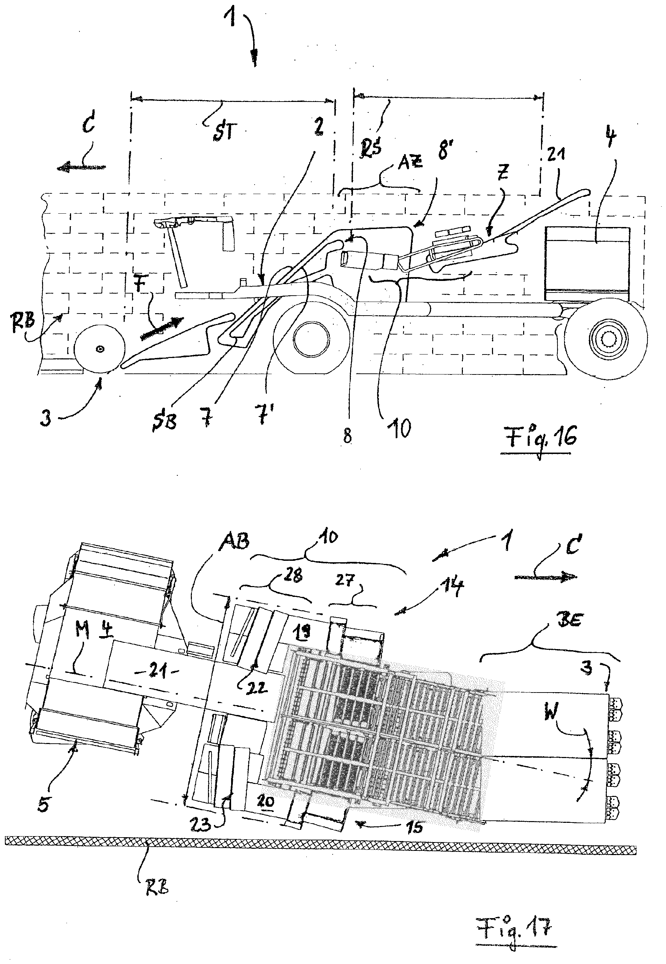

In Fig. 1 und Fig. 16 sind in jeweiligen Prinzipdarstellungen die wesentlichen Bauteile einer Hackfruchterntemaschine 1 dargestellt. Dazu ergibt sich in Zusammenschau mit Fig. 13 bis Fig. 15 ein prinzipieller Wirkungs- und Sortierablauf dieser "selbstfahrenden" Maschine 1 insbesondere beim Ernten von Knollen K aus vier Reihen R bzw. Kartoffeldämmen. Denkbar ist auch, dass die nachfolgend näher zu beschreibende Maschine 1 in Form eines gezogenen Kartoffelroders oder einer stationären Reinigungsmaschine ausgeführt ist, so dass die in Fig. 1 bzw. Fig. 16 nicht näher dargestellten Antriebskomponenten wie Motoren, Führerhaus und/oder Sammelbunker entbehrlich sind.

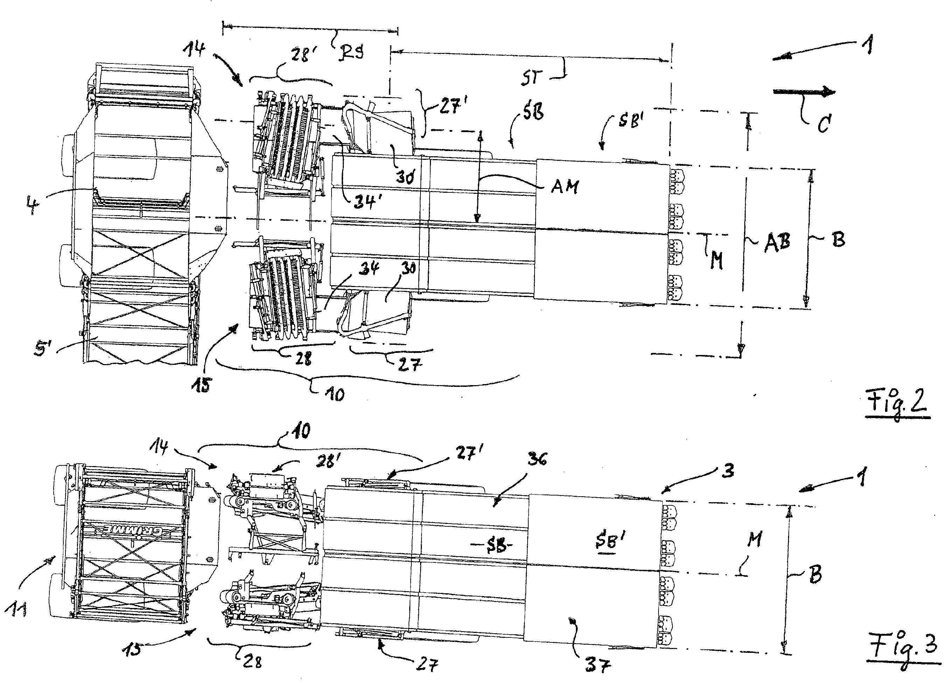

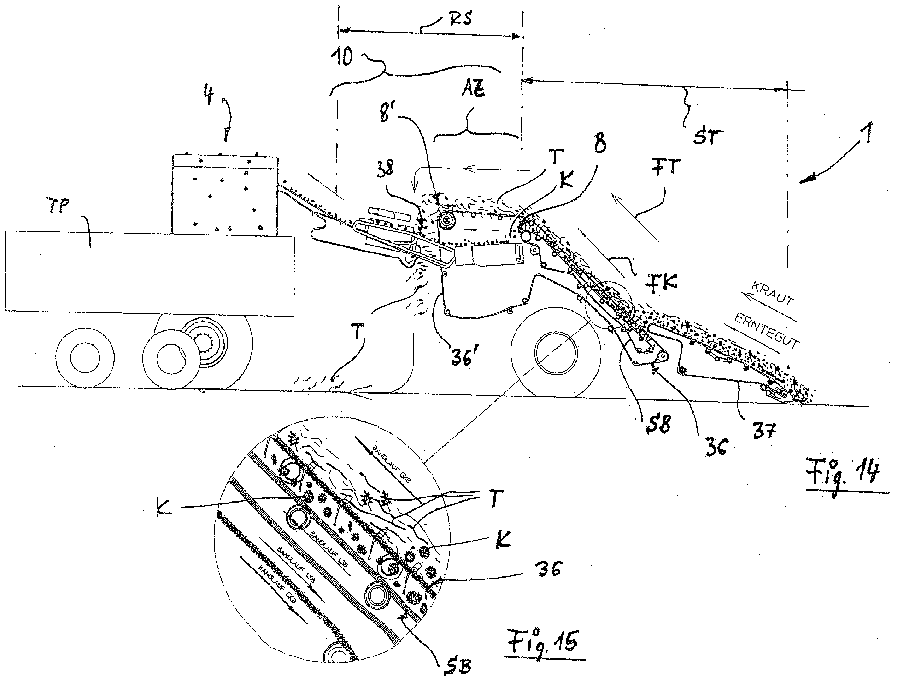

Derartige Maschinen 1 weisen im vorderen Bereich eines Maschinenrahmens 2 (Fig. 16) eine Rodevorrichtung 3 auf. Dieser Rodevorrichtung 3 ist - in Förderrichtung F nachfolgend - eine ansteigende sowie im Wesentlichen unveränderte Bearbeitungsbreite B aufweisende erste Sortierstrecke ST zugeordnet (Fig. 1). Aus der funktionalen Zusammenschau von Fig. 1 mit Fig. 13 bis Fig. 15 wird deutlich, dass im Bereich dieser ersten Sortierstrecke ST die Beimengungen T in Form des Krautes (Pfeil FT) von dem vorzugsweise aus Knollen K, K' (mit nicht näher dargestellten Förder-Reststoffen) bestehenden Erntegut FK getrennt werden können. Für diese erste Trennphase sind unterschiedliche Systeme bekannt, wobei in der dargestellten Ausführung gemäß Fig. 14 in Zusammenschau mit Fig. 16 und Fig. 17 die Ausbildung einer vorderen Baueinheit BE deutlich wird, die bei der dargestellten Maschine 1 auch - in Relation zur Maschinenlängsmittelebene M - um einen Winkel W so geschwenkt werden kann, dass das System in "Hundegang-Stellung" entlang jeweiliger Randbegrenzungen RB in Fahrtrichtung C bewegbar ist (Fig. 17). Diese Fahrstellung der Hackfruchterntemaschine 1 kann dann vorteilhaft sein, wenn überstehende Teile des Systems die - dessen Fahrbreite entsprechende - Breite B überragen (hier: Arbeitsbreite gemäß AB, Fig. 2) oder nahe entlang der Randbegrenzung RB im Rode-Modus zu fahren ist.

Es ist bekannt, dass bei derartigen Rodemaschinen 1 das Erntegut in Form der Knollen K als Fördergut über zumindest die insgesamt mit ST (Fig. 16) bezeichnete Sortierstrecke sowie eine Reinigungsstrecke RS' (Fig. 1) zu einem Sammelbunker 4 oder direkt in einen Überlader 5' bewegt wird, wobei zwischen liegende Sortier- und Reinigungsvorgänge ablaufen und die gesammelten Knollen K' mittels eines Transportes TP abgefahren werden.

Dabei ist auch bekannt, dass zumindest ein jeweils entlang der bereichsweise ansteigenden Sortierstrecke ST verlagerbares Fördertrum 7, 7' im Bereich des Krautförderers FT bzw. des Knollen-Förderers FK bis zu einer oberen Abwurfzone AZ (Fig. 16) geführt ist. Danach kann das jeweilige Fördergut K (Knollen) bzw. das Fördergut T (Beimengungen) auf zumindest eine nachfolgende Förderstrecke übergeben oder abgeleitet werden.

Ausgehend von diesen allgemein bekannten Maschinenkonzepten mit im Wesentlichen "linearer Förder-, Reinigungs- und Sortiereinheit" sieht das erfindungsgemäß verbesserte Konzept vor, dass das jeweilige Fördertrum 7 bzw. 7' im Bereich der ersten Sortierstrecke ST der Maschine 1 - nahe einem jeweiligen oberen Abförderende 8, 8' - unmittelbar mit zumindest einer multifunktional ausrüstbaren Umlenkfördereinheit 10, 10' (Fig. 2, Fig. 13) zusammenwirkt.

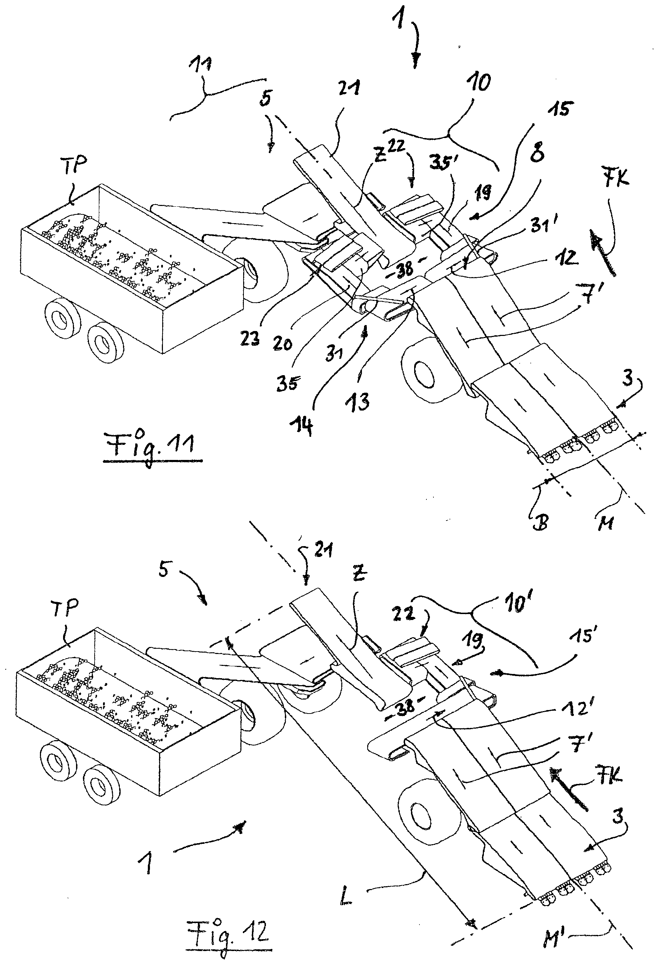

Diese Umlenkfördereinheit 10, 10' (Fig. 11, Fig. 12) ist dabei so konzipiert, dass zumindest der Fördergutstrom FK des Erntegutes K aufnehmbar und einem üblicherweise nachfolgend vorgesehenen Sortier- und Reinigungsprozess zugeführt werden kann. Dabei werden dann entlang einer hinreichend langen "Bewegungsbahn" die Knollen K aufgelockert, vereinzelt, von Erdteilen befreit, von Reststoffen getrennt und weitergeleitet. Dabei ist ein Aussortieren von Steinen, Kluten und ähnlichen Festkörpern von Hand oder maschinell möglich, so dass ein gesäuberter Knollen-Strom in den Bunker 4 gelangt.

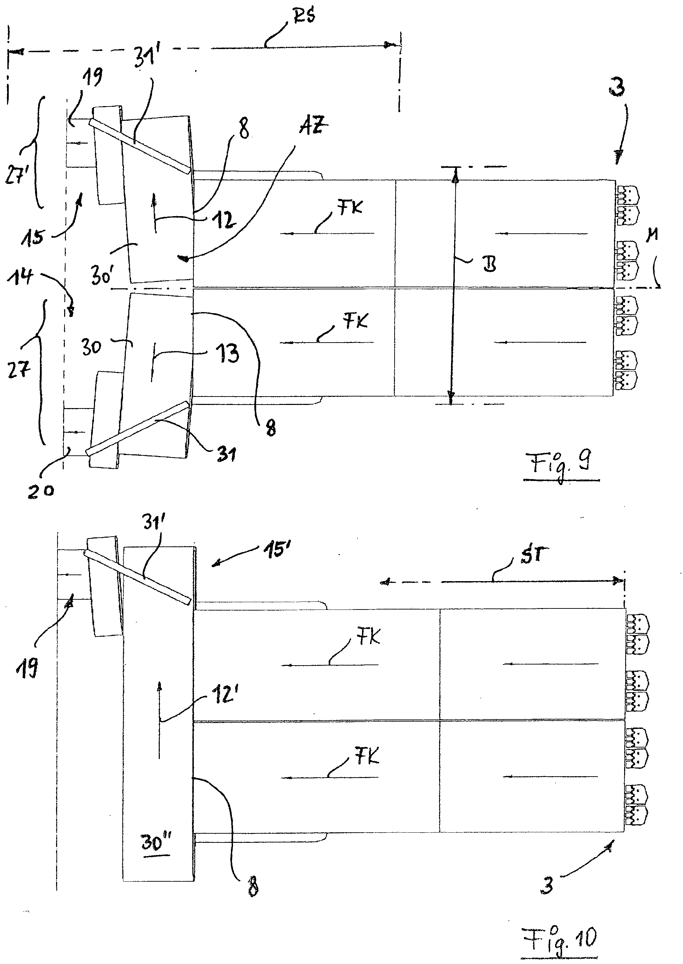

Aus der Zusammenschau der Darstellungen in Fig. 9 bis Fig. 12 wird deutlich, dass die diesen Sortiervorgang realisierende und als kompakte Struktur aus an sich bekannten Komponenten aufgebaute Umlenkfördereinheit 10, 10' zumindest einen im Wesentlichen quer zur Zuführrichtung FT, FK des jeweiligen Fördertrums 7, 7' verlagerbaren Teilförderstrom 12, 12', 13 bildet. Dieser wird damit entlang einer variabel vorgebbaren Bewegungsbahn dem Bereich zumindest eines hinteren Abförderers 11 zugeführt und damit dem Bunker 4 bzw. dem Überlader 5 übergeben.

Ausgehend von einer gezielt steuerbaren "Umlenkung" des Erntegutstromes FK im Bereich der Umlenkfördereinheit 10 wird eine - im Vergleich mit bekannten Maschinen - funktional verbesserte und vorteilhaft "quer" in der Maschine 1 verlaufende Teilbereiche aufweisende Aggregate-Anordnung bereitgestellt. Diese Integration zumindest einer oberen Umlenkfördereinheit 10, 10' in das Maschinen-System 1 ist darauf abstellt, dass nunmehr - bei im Wesentlichen gleichen Längenabmessungen derartiger Maschinen - jeweils zumindest ein Trenngerät 14, 15, 15' in variierbaren Einbaulagen und Nutzpositionen mit den Bauteilen der vorgelagerten Sortierstrecke ST kombinierbar ist.

Diese Integration des zumindest einen Trenngerätes 14, 15, 15' in den Bereich der Umlenkfördereinheit 10, 10' schafft die Möglichkeit, in der auf dem Feld vorgesehenen Arbeitsposition (Fig. 1, Fig. 13) eine die Aufnahmebreite B der Maschine 1 überragende Bedienposition - mit einer Überstandsbreite AB - durch die erstmalige Anwendung von verlagerbaren Trenngeräten 14, 15 zu definieren. Aus dieser - durch entsprechende Bauteilgestaltungen im Bereich der Umlenkfördereinheit 10, 10' optimierbaren - Arbeitsposition kann das zumindest eine Trenngerät 14, 15 in eine zur Straßenfahrt nutzbare Fahrposition (Fig. 3, Breite B) zurückgeführt werden.

Damit wird - ausgehend von an sich bekannten Überlegungen zur Fahrbahn-Anpassung von landwirtschaftlichen Maschinen - mit überraschend einfachen Mitteln die Möglichkeit geschaffen, eine Vier-Reihen-Rodemaschine 1 in ihren Längenabmessungen L (Fig. 12) nur unwesentlich zu verändern, gleichzeitig eine optimale Verarbeitung eines vergrößerten Erntevolumens zu gewährleisten und Anforderungen an eine uneingeschränkte Eignung zur Straßenfahrt - auch bei Selbstfahrern - mit vergleichsweise geringem Aufwand zu erfüllen.

Es versteht sich, dass die der Sortierstrecke ST vorgelagerte Rodevorrichtung 3 mit einer im Wesentlichen der zur Straßenfahrt der Maschine 1 entsprechenden Aufnahmebreite B (Fig. 2) maximal ausgeführt ist. Denkbar ist dabei, dass auch durch Breitenvariation in diesem Rodebereich der Maschine 1 die jeweilige Anzahl der aufnehmbaren Kartoffelreihen R variabel gestaltet werden kann und durch "klappbare" Rode-Baugruppen die Anzahl der aufnehmbaren Reihen R variiert wird.

Wie bereits in den Zeichnungen gemäß Fig. 2 bis Fig. 8 ersichtlich, weist das System im Bereich der Umlenkfördereinheit 10 vorteilhafterweise zwei spiegelbildlich zur Maschinenlängsmittelebene M angeordnete Trenngeräte 14, 15 auf, von denen das auf der Sortierstrecke ST vorgereinigte und breitflächig mit zumindest einem Siebband SB (Fig. 15) herangeführte Erntegut K im Bereich der Umlenkfördereinheit 10, 10' optimal erfasst werden kann. Aus den Funktionsdarstellungen in Fig. 14 bis Fig. 16 wird deutlich, dass der Teilförderstrom FK des Erntegutes K optimal getrennt von den in der Abwurfzone AZ befindlichen Beimengungen T (Pfeil FT) auf den jeweiligen seitlichen Teilförderstrecken 12, 13 (Fig. 11) verlagert wird.

In optimaler Ausrichtung der Baugruppen ist vorgesehen, dass die beiden verlagerbaren Trenngeräte 14, 15 der Umlenkfördereinheit 10 jeweilige, von der Maschinenlängsmittelebene M im Wesentlichen entgegengesetzt die nach außen gerichtete Teilförderstrecken 12, 13 bilden. Von diesen aus werden die das Erntegut bildenden Knollen K, K' über weitere, zu einem als Abförderer 11 vorgesehenen Überlader 5 gerichtete Sortierstrecken 19, 20, 22, 23 gelenkt, wobei vorzugsweise eine Zusammenführung Z der gebildeten Erntegutströme im Bereich eines hinteren zentralen Abförderbandes 21 erfolgt (Fig. 11).

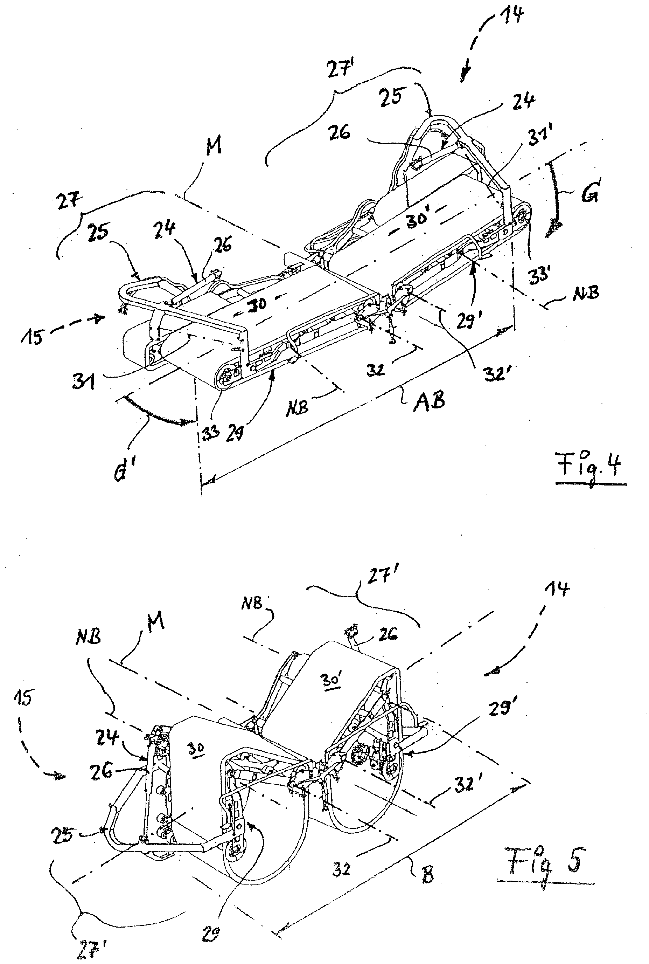

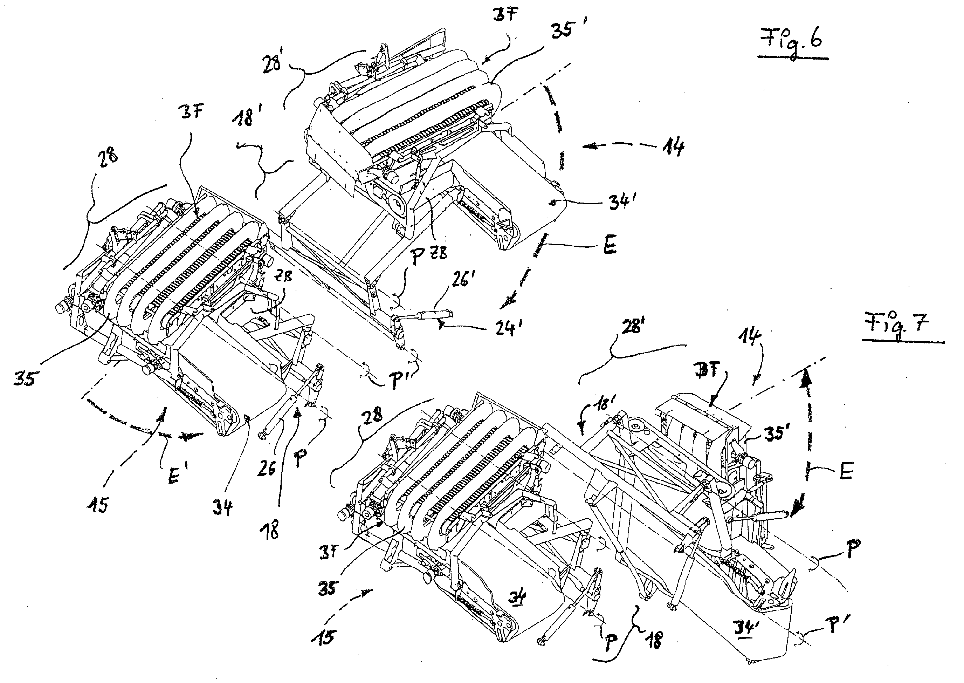

Aus einer Zusammenschau der Darstellungen in Fig. 2 bis Fig. 7 werden auch die konstruktiven Details im Bereich der "doppelten" Umlenkfördereinheit 10 in jeweiligen Bedienstellungen deutlich. Ausgehend von der Maschinenlängsmittelebene M wird die spiegelbildlich angeordnete Bauteilstruktur (die sich im Bereich des hier nicht näher dargestellten Maschinenrahmens 2 erstreckt) deutlich. Die jeweils einen der Teilströme im Bereich der beiden Teilförderstrecken 12, 13 aufnehmenden Trenngeräte 14, 15 sind so abgestützt, dass jeweilige, in Fig. 6 mit einem Pfeil E bzw. E' dargestellte Verlagerungen als bevorzugte Bewegungsrichtungen ausführbar sind. Eine entsprechende "Klapp-Verlagerung" ist in Fig. 4 und Fig. 5 mit Pfeilen G, G' verdeutlicht, so dass die prinzipiellen Stellbewegungen zur jeweiligen Positionierung der Trenngeräte 14, 15 nachvollziehbar sind.

Für diese bevorzugten Schwenk-Verlagerungen - in Pfeilrichtung E, E' bzw. G, G' - sind zumindest jeweilige Teil-Baugruppen der randseitigen Trenngeräte 14, 15 des Umlenkförderers 10, 10' mittels einer zumindest einen hydraulischen oder elektromotorischen Stellantrieb 24, 24' aufweisenden Stellbaugruppe 25, 25' verlagerbar abgestützt. Die Stellantriebe sind dabei vorzugsweise mit jeweiligen Hydraulikzylindern 26, 26' versehen.

Aus der Zusammenschau des jeweiligen Umlenkförderers 10 in Fig. 2 und Fig. 3 mit den Detaildarstellungen in Fig. 4 bis Fig. 7 wird deutlich, dass die Trenngeräte 14, 15 in bevorzugter Ausführung jeweils als zweiteiliges System ausgebildet sind. In den Darstellungen gemäß Fig. 4 und Fig. 5 ist beispielhaft die Ausbildung einer jeweiligen vorderen Aufnahmeschwenkeinheit 27, 27' als autarke Baueinheit in unterschiedlichen Bedienstellungen ersichtlich. Mit dieser Aufnahmeschwenkeinheit 27, 27' wirkt eine jeweilige, insgesamt mit 28, 28' bezeichnete Abförderschwenkeinheit als zweite autarke Baugruppe zusammen, deren konstruktive Gestaltung sich insbesondere aus Fig. 6 und Fig. 7 ergibt.

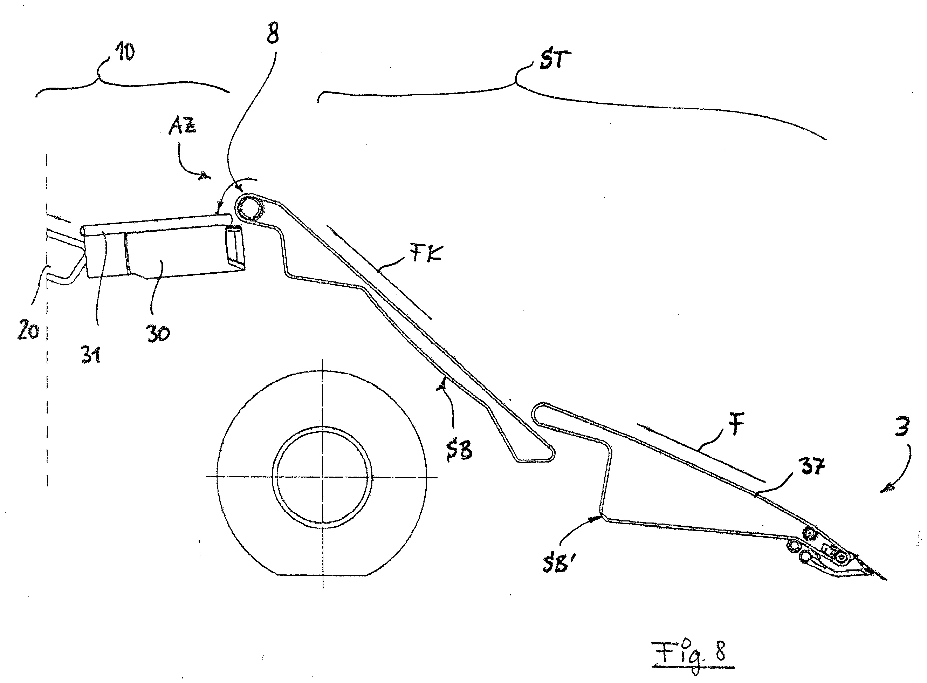

Ausgehend von den grundlegenden Funktionsbeschreibungen des Systems und dessen Prinzipdarstellungen gemäß Fig. 8 bis Fig. 12 wird deutlich, dass die Aufnahmeschwenkeinheit 27 mit entsprechenden Leitbaugruppen zu kombinieren ist, um die gerichtete Weiterleitung der Knollen K, K' auf entsprechenden Teilförderstrecken 12, 13 zu realisieren. Gleichzeitig ist die Konstruktion so zu optimieren, dass mit vergleichsweise geringem Aufwand bei der Schwenkverlagerung - zumindest: G, G' - die vorgesehene Breite B zur Positionierung in der Fahrstellung erreicht wird (Fig. 5). Dabei ist vorgesehen, dass die Aufnahmeschwenkeinheiten 27, 27' in symmetrischer Anordnung mit jeweils zumindest einem äußeren Rahmenabschnitt 29, 29' versehen sind. Dabei kann das Fördergut mittels eines Überleitbandes 30, 30' und einer Leitwalze 31, 31' den in Fig. 9 bis 12 dargestellten nachfolgenden Sortierstrecken 19 bzw. 20 zugeführt werden. Aus der Zusammenschau von Fig. 4 und Fig. 5 wird deutlich, dass diese Aufnahmeschwenkeinheiten 27, 27' zumindest im Bereich des Rahmenabschnitts 29, 29' um eine zur Längsmittelebene M der Maschine 1 parallele sowie horizontal ausrichtbare Schwenkachse 32, 32' verlagerbar sind (Pfeil G, G').

Die konstruktive Weiterbildung der Aufnahmeschwenkeinheit 27 kann auch vorsehen, dass mit mehreren der Rahmenabschnitte 29, 29' ein variabel verlängerbarer Stützrahmen gebildet werden kann, mit dem das über jeweilige Umlenkrollen 33, 33' geführte und als Förderband, Siebband o. dgl. ausgebildete Überleitband 30, 30' zusammenwirkt. In der dargestellten Ausführung (Fig. 4, Fig. 5) ist die Aufnahmeschwenkeinheit 27, 27' in optimaler Gestaltung des Stützrahmens mit zwei "geteilten" Rahmenabschnitten 29, 29' versehen, so dass die in Fig. 5 ersichtliche "Knick-Stellung" durch zumindest eine Betätigung der Hydraulikzylinder 26 möglich ist. Damit wird deutlich, dass die jeweiligen seitlichen Rahmenteile mittels nicht näher dargestellter Stellorgne auch um eine Achse NB geschwenkt werden können.

Aus diesen Übersichtsdarstellungen in Fig. 4 und Fig. 5 wird deutlich, dass im Bereich der Aufnahmeschwenkeinheit 27, 27' mit einer optimalen Konstruktion des Stützrahmens bzw. der jeweiligen Rahmenabschnitte 29, 29' das vorgesehene "Verlagerungs-System" mit einfach steuerbaren Komponenten gebildet werden kann. Dabei kann auch vorgesehen sein, dass durch variierbare Baugruppen das Zusammenschieben, -legen und/oder klappen der Aufnahmeschwenkeinheiten 27, 27' möglich ist und in jedem Falle die zur Straßenfahrt erforderliche Breitenabmessung B erreicht wird.

Eine weitere Zusammenschau von jeweiligen Stellpositionen der Baugruppen gemäß Fig. 2 und Fig. 3 - mit Blick auf die Einzeldarstellungen in Fig. 6 und Fig. 7 - verdeutlicht den Aufbau des jeweiligen Trenngerätes 14, 15 im Bereich der Abförderschwenkeinheiten 28, 28' mit Stellbaugruppe 18, 18'.

Damit wird prinzipiell deutlich, dass auch die Aufnahmeschwenkeinheiten 27, 27' jeweils als eine modulare Baugruppe ausgebildet sein können, die im Bereich ihrer Stellbaugruppen 25, 25' unabhängig von der nachgeordneten Abförderschwenkeinheiten 28, 28' verlagerbar sind. Diese strukturellen Anpassungen sind so ausführbar, dass die Trenngeräte 14, 15 insgesamt mit autark verlagerbaren Schwenkeinheiten 27, 27' und 28, 28' versehen werden, derart, dass fachgemäß anpassbare Steuer- und Stellbaugruppen variable Gestaltungen der erfindungsgemäßen Maschine 1 mit Umlenkförderer 10, 10' ermöglichen.

Die spiegelbildlich angeordneten Abförderschwenkeinheiten 28, 28' sind - wie aus den Darstellungen gemäß Fig. 11 in Zusammenschau mit Fig. 6 und Fig. 7 deutlich wird - mit jeweils im Abstand AM (Fig. 2) zur Längsmittelebene M verlaufenden Übernahmebändern 34, 34' versehen, so dass das Erntegut K, K' entgegen der Fahrtrichtung C der Maschine 1 nach hinten verlagert werden kann. Dem rückseitigen Ende des Übernahmebandes 34, 34' ist ein von einem Fingerband BF o. dgl. Querförderer übergriffenes Überleitband 35, 35' zugeordnet. Von diesem aus wird in einer senkrecht zur Maschinenlängsmittelebene M verlaufenden Förderrichtung (gemäß Sortierstrecke 22, 23; Fig. 11) das Erntegut K, K' auf den Abförderer 21 umgelenkt. Damit werden die bis hierhin "geteilten" Förderströme der Umlenkfördereinheit 10 im Bereich des Abförderers 21 wieder zusammengeführt und dieser Förderstrom dem Bunker 4 bzw. einem Überlader 5 übergeben (Fig. 1, Fig. 14).

In an sich bekannter konstruktiver Ausführung des Übernahmebandes 34, 34' ist vorgesehen, dass dieses am Abförderende auch mit einer den jeweiligen Teilstrom lenkenden Leitwalze LW (hinter dem Querförderer BF) versehen sein kann. Vorzugsweise wird hier eine Ausführung in Form des Fingerbandes BF genutzt, da damit ein für die Sortierung von Knollen K und Stein- oder Klutenbestandteilen geeignetes System erreicht wird. Mittels der auf dem Übernahmeband 34, 34' - und einem denkbaren Zwischenband ZB - aufliegenden flexiblen Fingerstrukturen des Querförderers BF werden die Knollen K weiterbewegt, und die vergleichsweise schweren Kluten und Steine können im Bereich eines Sortierplatzes PS (Fig. 13) abgeleitet werden.

Aus der vorbeschriebenen konstruktiven Gestaltung der hinteren Abförderschwenkeinheit 28, 28' ergibt sich, dass insbesondere das Übernahmeband 34 und das als Querförderer wirkende Überleitband 35 die autarke, gemeinsam verlagerbare Einheit bilden. Diese ist unabhängig von der vorgelagerten, nur zwei Querförderer 30, 30' aufweisenden Aufnahmeschwenkeinheit 27, 27' schwenkbar. Damit wird gleichzeitig deutlich, dass das dargestellte erfindungsgemäße "Klappsystem" in unterschiedlichen Ausführungen auch unterschiedliche Verlagerungsräume im Gesamtkonzept der Maschine 1 erfordern kann. Daraus ergeben sich weitere, im Rahmen der Erfindung als offenbart geltende Kombinationsmöglichkeiten der Baugruppen. Diese variablen Bauteilverknüpfungen können insbesondere auch aus jeweiligen variierbaren Dimensionierungen der Bauteilbreiten im Bereich des Siebbandes SB bzw. des Abförderers 21 resultieren. Ebenso ist denkbar, die für jeweilige Stellbaugruppen 25, 25' (Fig. 4, Fig. 5) und 18, 18' (Fig. 6, Fig. 7) allgemein dargestellten Schwenk-Verstellungen gemäß Pfeil E, E' und G, G' mit weiteren Schwenk- und/oder Schubkomponenten (Pfeile P, P'; Fig. 6, Fig. 7) zu kombinieren, so dass jeweils an die Raumbedingungen optimal anpassbare Packstellungen der Systemkomponenten in der Maschine 1 erreicht werden.

Das erfindungsgemäße Maschinenkonzept mit den Bauteilen einer "verlagerbaren" Umlenkfördereinheit 10, 10' sieht auch eine Verbesserung der - bereits im Zusammenhang mit den Darstellungen in Fig. 13 bis Fig. 15 angesprochenen - Gestaltung im Bereich der Beimengungen-Förderung FT vor. Ausgehend davon, dass prinzipiell auch eine - in Draufsicht (Fig. 13) mit einem Pfeil SU angedeutete - seitliche Umlenkung (abweichend von der Förderrichtung FT) denkbar ist, sieht die Förderung FT im Bereich der Maschine 1 ein bevorzugtes "Hochfördern" (Fig. 14) vor.

Die in den Bereich der Umlenkfördereinheit 10, 10' mittels eines Krautbandes 36 hochgeförderten Beimengungen (Förderung FT) werden - anschließend an das ansteigende Fördertrum der Sortierstrecke ST - entlang eines im Wesentlichen waagerechten Teilbereichs (Fig. 14, Zone AZ) zumindest teilweise über den Trenngeräten 14, 15 der Umlenkfördereinheit 10, 10' verlagert. Daran anschließend bildet das Krautband 36 einen im Wesentlichen vertikal nach unten umgelenkten Rückführtrum 36'. Aus Fig. 13 und Fig. 14 wird gleichzeitig eine Band-Kombination aus Krautband 36 und Siebband SB deutlich, wobei diese an sich bekannte Zwei-Band-Variante als eine doppellagige Reinigungsstruktur nur über den Bereich der ersten Sortierstrecke ST verläuft.

In Zusammenschau mit Fig. 17 wird deutlich, dass diese doppellagige Reinigungsstruktur mit der vorgelagerten Baueinheit BE kombiniert ist, in deren Bereich ebenfalls ein Siebförderer 37 vorgesehen ist. Aus der Darstellung gemäß Fig. 15 wird der optimale Trennvorgang der Beimengungen T und der Knollen K des Erntegutes im Bereich der doppellagigen Reinigungsstruktur deutlich, wobei das Krautband 36 vorzugsweise mit parallelem Abstand zum den Erntegutstrom bildenden Siebband SB verläuft.

Ausgehend von diesem an sich bekannten und nunmehr zur Umlenkfördereinheit 10, 10' gerichteten Fördersystem ist in deren Bereich eine weitere Optimierung und Anpassung erforderlich. In zweckmäßiger Ausführung kann der Rückführtrum 36' des Krautbandes 36 so geführt sein, dass dieses zumindest bereichsweise einen von der Umlenkfördereinheit 10, 10' gebildeten Fallraum 38 durchgreift. Aus den jeweiligen Gesamtansichten und Prinzipdarstellungen des Systems wird deutlich, dass der mit dem Krautband 36 zusammenwirkende Fallraum 38 einen zentral in der Maschine 1 angeordneten Schachtbereich definiert. Dabei ist der Fallraum 38 oberseitig am Umfangsrand zweckmäßig von den Baugruppen der Trenngeräte 14, 15 begrenzt. Ebenso ist denkbar, dass ein das Sieb- und Krautband-Systems (Fig. 1) aufnehmender Hauptrahmen 39 mit einer entsprechenden Leitplatte 40 versehen ist und damit eine effiziente Schachtbegrenzung die gezielte Ausleitung der Beimengungen T (Fig. 14) ermöglicht.

## Patentansprüche

1. Hackfruchterntemaschine, die in Form eines insbesondere selbstfahrenden Kartoffelroders oder einer stationären Reinigungsmaschine ausgebildet ist, die im vorderen Bereich eines Maschinenrahmens (2) eine Rodevorrichtung (3) aufweist, dieser in Förderrichtung (F) nachfolgend eine ansteigende sowie eine im Wesentlichen unveränderte Bearbeitungsbreite (B) aufweisende erste Sortierstrecke (ST) zugeordnet ist und von dieser aus die Beimengungen aussortierbar sind, derart, dass das aus Hackfrüchten wie Rüben, Kartoffeln o. dgl. gebildete Erntegut (K, K') als jeweiliges Fördergut über zumindest eine Reinigungsstrecke (RS) einem Sammelbunker (4) oder einem Überlader (5) zuführbar ist, wobei zumindest ein entlang der bereichsweise ansteigenden Sortierstrecke (ST) verlagerbares Fördertrum (7, 7') zumindest bis zu einer oberen Abwurfzone (AZ) geführt ist und danach das jeweilige Fördergut (K, T) auf zumindest eine nachfolgende Förderstrecke übergebbar ist, wobei das jeweilige Fördertrum (7, 7') im Bereich eines oberen Abförderendes (8, 9) mit zumindest einer den Fördergutstrom (Pfeil FK) des Erntegutes (K) aufnehmenden oberen Umlenkfördereinheit (10, 10') zusammenwirkt und diese zumindest einen im Wesentlichen quer zur Zuführrichtung (FT, FK) des jeweiligen Fördertrums (7, 7') verlagerbaren Teilförderstrom (12,12',13) bildet, **dadurch gekennzeichnet, dass** der Teilförderstrom (12,12',13) dem Bereich zumindest eines hinteren Abförderers (21) zuführend ausgebildet ist, wobei die Umlenkfördereinheit (10, 10') des Systems mit zumindest einem in Arbeitsposition zumindest einseitig über die Aufnahmebreite (B) der Maschine (1) in eine seitliche Überstandsbreite (AB) verlagerbaren sowie aus dieser Position in eine zur Straßenfahrt nutzbare Fahrposition rückführbaren Trenngerät (14, 15, 15') versehen ist.

2. Hackfruchterntemaschine nach Anspruch 1, **dadurch gekennzeichnet, dass** die der Reinigungs- und Sortierstrecke (RS, ST) vorgelagerte Rodevorrichtung (3) mit einer im Wesentlichen der zur Straßenfahrt der Maschine (1) entsprechenden Aufnahmebreite (B) ausgebildet ist.

3. Hackfruchterntemaschine nach Anspruch 1 oder 2, **dadurch gekennzeichnet, dass** das auf der Sortierstrecke (ST) vorgereinigte und breitflächig mit zumindest einem Siebband (SB) herangeführte Erntegut (K, K') im Bereich von zwei Umlenkfördereinheiten (10, 10') auf zwei einen jeweiligen Teilstrom bildende Trenngeräte (14, 15) verteilbar ist.

4. Hackfruchterntemaschine nach einem der Ansprüche 1 bis 3, **dadurch gekennzeichnet, dass** die Teilströme des Erntegutes (K, K') getrennt von den in der Abwurfzone (AZ) befindlichen Beimengungen (D) auf jeweiligen Teilförderstrecken (12, 13) verlagerbar sind.

5. Hackfruchterntemaschine nach Anspruch 3 oder 4, **dadurch gekennzeichnet, dass** die beiden Trenngeräte (14, 15) der Umlenkfördereinheit (10) jeweilige von der Maschinenlängsmittelebene (M) im Wesentlichen entgegengesetzt nach außen gerichtete Teilförderstrecken (12, 13) bilden und diese jeweils mit zumindest einer zum Sammelbunker (4) oder einem Überlader (5) verlaufenden sowie längs (19, 20) und quer (22, 23) ausrichtbaren Sortierstrecke zusammenwirken.

6. Hackfruchterntemaschine nach einem der Ansprüche 1 bis 5, **dadurch gekennzeichnet, dass** die jeweils einen der Teilströme im Bereich der beiden Teilförderstrecken (12, 13) aufnehmenden Trenngeräte (14, 15) ausgehend von der Maschinenlängsmittelebene (M) des vorgeordneten Siebbandes (SB, SB') als spiegelbildlich angeordnete Bauteilstrukturen in den Maschinenrahmen (2) integriert sind.

7. Hackfruchterntemaschine nach einem der Ansprüche 1 bis 6, **dadurch gekennzeichnet, dass** zumindest jeweilige Teil-Baugruppen der/des randseitigen Trenngeräte(s) (14, 15) des Umlenkförderers (10, 10') mittels einer zumindest einen hydraulischen oder elektromotorischen Stellantrieb (24, 24') aufweisenden Stellbaugruppe (25, 25') verlagerbar sind.

8. Hackfruchterntemaschine nach einem der Ansprüche 1 bis 7, **dadurch gekennzeichnet, dass** die Trenngeräte (14, 15) jeweils ein zweiteiliges System bilden, wobei dieses eine vordere Aufnahmeschwenkeinheit (27, 27') und eine nachgeordnete Abförderschwenkeinheit (28, 28') aufweist.

9. Hackfruchterntemaschine nach Anspruch 8, **dadurch gekennzeichnet, dass** die Aufnahmeschwenkeinheit (27, 27') und die Abförderschwenkeinheit (28, 28') zumindest bereichsweise autark verlagerbare Bauteile aufweisen.

10. Hackfruchterntemaschine nach Anspruch 8 oder 9, **dadurch gekennzeichnet, dass** die beiden Schwenkeinheiten (27, 27'; 28, 28') jeweils modulare Baugruppen bilden und diese jeweils im Bereich ihrer Stellbaugruppe (25, 25'; 18, 18') autark verlagerbar (Pfeil E, E'; G, G') gehalten sind.

11. Hackfruchterntemaschine nach einem der Ansprüche 8 bis 10, **dadurch gekennzeichnet, dass** die Aufnahmeschwenkeinheit (27, 27') einen äußeren Rahmenabschnitt (29, 29'), zumindest eine Leitwalze (31, 31') sowie ein Überleitband (30, 30') aufweist und diese Baugruppe zumindest um eine zur Längsmittelebene (M) der Maschine (1) parallele sowie horizontal ausrichtbare Schwenkachse (32, 32') verlagerbar ist.

12. Hackfruchterntemaschine nach Anspruch 11, **dadurch gekennzeichnet, dass** die Aufnahmeschwenkeinheit (27, 27') im Bereich eines mehrere Rahmenabschnitte (29, 29') aufweisenden Stützrahmens mit einem über Umlenkrollen (33, 33') geführten Förderband versehen ist.

13. Hackfruchterntemaschine nach Anspruch 11 oder 12, **dadurch gekennzeichnet, dass** die Aufnahmeschwenkeinheit (27, 27') im Bereich eines mehrteiligen Stützrahmens jeweils mehr als einen der Rahmenabschnitte (29, 29') aufweist.

14. Hackfruchterntemaschine nach einem der Ansprüche 11 bis 13, **dadurch gekennzeichnet, dass** die Aufnahmeschwenkeinheit (27, 27') im Bereich des Stützrahmens mit verlagerbaren Rahmenabschnitten (29, 29') versehen sind, derart, dass durch Zusammenschieben, -legen - und/oder -klappen das zur Straßenfahrt erforderliche Breitenmaß (B) herstellbar ist.

15. Hackfruchterntemaschine nach einem der Ansprüche 8 bis 10, **dadurch gekennzeichnet, dass** das Trenngerät (14, 15) im Bereich der Abförderschwenkeinheit (28, 28') mit jeweils zumindest einem parallel zur Maschinenlängsmittelebene (M) verlaufenden Übernahmeband (34, 34') und einem diesem in Form eines Fingerbandes (FB) zugeordneten Überleitband (35, 35') versehen ist, derart, dass das Erntegut (K, K') in Richtung des gemeinsamen Abförderers (21) umlenkbar ist.

16. Hackfruchterntemaschine nach Anspruch 15, **dadurch gekennzeichnet, dass** das Übernahmeband (34, 34') am Abförderende mit einer den Teilstrom zum Überleitband lenkenden Leitwalze (LW, LW') als Querförderer versehen ist.

17. Hackfruchterntemaschine nach Anspruch 15 oder 16, **dadurch gekennzeichnet, dass** der mit der Abförderschwenkeinheit (28, 28') zusammenwirkende Abförderer (21) insbesondere eine geringere Förderbreite aufweist als das vordere Siebband (SB).

18. Hackfruchterntemaschine nach einem der Ansprüche 15 bis 17, **dadurch gekennzeichnet, dass** das Übernahmeband (34, 34'), ein zu diesem paralleles Zwischenband (ZB) und das als Querförderer wirkende Überleitband (35, 35') das gemeinsam verlagerbaren Schwenk-Modul bilden.

19. Hackfruchterntemaschine nach einem der Ansprüche 1 bis 18, **dadurch gekennzeichnet, dass** das in den Bereich der Umlenkfördereinheit (10, 10') mittels eines Krautbandes (36) hochgeführte Beimengungen-Fördergut (FT) anschließend an das ansteigende Fördertrum entlang eines waagerechten Teilbereiches über den Trenngeräten (14, 15) der Umlenkfördereinheit (10, 10') verlagerbar ist und daran anschließend das Krautband (36) einen im Wesentlichen vertikal nach unten umgelenkten Rückführtrum (36') bildet.

20. Hackfruchterntemaschine nach Anspruch 19, **dadurch gekennzeichnet, dass** das Krautband (36) und ein Siebband (SB) als eine doppellagige Reinigungsstruktur vorgesehen sind.

21. Hackfruchterntemaschine nach Anspruch 19 oder 20, **dadurch gekennzeichnet, dass** das Krautband (36) zumindest im Bereich der ansteigenden Sortierstrecke (ST) mit parallelem Abstand zum den Erntegutstrom (FK) bildenden Siebband (SB) verläuft.

22. Hackfruchterntemaschine nach einem der Ansprüche 19 bis 21, **dadurch gekennzeichnet, dass** der Rückführtrum (36') des Krautbandes (36) so geführt ist, dass dieses zumindest bereichsweise einen von der Umlenkfördereinheit (10, 10') gebildeten Fallraum (38) für die Beimengungen (T) durchgreift.

23. Hackfruchterntemaschine nach einem der Ansprüche 19 bis 22, **dadurch gekennzeichnet, dass** der mit dem Krautband (36) zusammenwirkende Fallraum (38) einen zentral in der Maschine (1) angeordneten Schachtbereich definiert, dessen oberseitiger Umfangsrand von den Baugruppen der Trenngeräte (14, 15) begrenzt ist.

24. Hackfruchterntemaschine nach einem der Ansprüche 19 bis 23, **dadurch gekennzeichnet, dass** der zumindest eine Fallraum (38) hinter der Umlenkfördereinheit (10, 10') angeordnet sind.

25. Hackfruchterntemaschine nach einem der Ansprüche 1 bis 24, **dadurch gekennzeichnet, dass** im Bereich der Umlenkfördereinheit(en) (10, 10') mehr als das eine oder bzw. die zwei Trenngerät(e) (14, 15) vorgesehen sind.

26. Hackfruchterntemaschine nach einem der Ansprüche 1 bis 25, **dadurch gekennzeichnet, dass** die Umlenkfördereinheit (10) mit einseitig der Maschinenlängsebene (M') wirksamen Baugruppen versehen ist.

## Claims

1. A root crop harvester, in the form of an in particular self-driving potato harvester or of a stationary cleaning machine, which is provided with a lifting device (3) arranged in a leading area of a machine frame (2), wherein a first ascending sorting stretch (ST) is arranged downstream of the lifting device in a conveying direction (F), wherein the ascending sorting stretch has a substantially unvaried working width (B), and, starting from the first ascending sorting stretch, the mixtures may be at least partially separated out, in such a way that the harvested material (K, K'), which is formed by root crops such as beets, potatoes or similar, may be transferred as a respective conveyed material via at least one cleaning stretch (RS) to a collecting bunker (4) or an unloading elevator (5), at least one conveying run (7, 7'), which is movable along the partially ascending sorting stretch (ST) is guided at least to an upper drop zone (AZ) and thereafter the conveyed material (K, T) may be transferred to at least one successive conveying stretch, wherein the respective conveying run (7, 7') interacts, in the area of an upper discharge end (8, 9), with at least one upper deflection conveying unit (10, 10'), which receives the stream of conveyed material (arrow FK) of harvested material (K) and forms at least one partial conveyed stream (12, 12', 13) which may be moved transversally to the feed direction (FT, FK) of the respective conveying run (7, 7'), **characterised in that** the partial conveyed stream (12, 12', 13) may be transferred to at least one rear unloading conveyor (21), wherein the deflection conveying unit (10, 10') of the system is provided with at least one separating device (14, 15, 15'), which, in the working position, may be moved at least on one side past the receiving width (B) of the machine (1) into a position of lateral projecting width (AB) and may be returned from this position into a travel position, which is used for road travel.

2. The root crop harvester according to claim 1, **characterised in that** the lifting device (3), which is positioned upstream of the cleaning and sorting stretch (RS, ST), comprises a receiving width (B), which substantially corresponds to the road travel width of the machine (1).

3. The root crop harvester according to claim 1 or 2, **characterised in that** the harvested material (K, K') which is pre-cleaned on the sorting stretch (ST) and which is supplied in a wide swath by at least one screen belt (SB), may be distributed onto two separating devices (14, 15) which form a respective partial stream in the area of two deflection conveying units (10, 10').

4. The root crop harvester according to any of claims 1 to 3, **characterised in that** the partial streams of harvested material (K, K') are movable, separated from the mixtures (D) which are positioned in the drop zone (AZ), onto respective partial conveying stretches (12, 1 3).

5. The root crop harvester according to claim 3 or 4, **characterised in that** both separating devices (14, 15) of the deflection conveying unit (10) form respective partial conveying stretches (12, 13), which are oriented in opposite and outward directions relative to a longitudinal machine centre plane (M), and which each interact with at least one sorting stretch extending toward the collecting bunker (4) or an unloading elevator (5) and which may be oriented longitudinally (19, 20) and transversely (22, 23).

6. The root crop harvester according to any of claims 1 to 5, **characterised in that** the separating devices (14, 15) each receiving one of the partial streams in the area of the two conveying stretches (12, 13) are integrated in the machine frame (2), starting from the longitudinal machine centre plane (M) of the upstream screen belt (SB, SB'), as mirror-symmetrically arranged component structures.

7. The root crop harvester according to any of claims 1 to 6, **characterised in that** at least the partial component groups of the one or more separating devices (14, 15) on the edge of the deflection conveyor (10, 10') are movable by an actuator component group (25, 25') comprising at least one hydraulic actuator or at least one electromotoric actuator (24, 24').

8. The root crop harvester according to any of claims 1 to 7, **characterised in that** the separating devices (14, 15) each form a two-part system comprising a leading receiving pivot unit (27, 27') and a downstream unloading pivot unit (28, 28').

9. The root crop harvester according to claim 8, **characterised in that** the receiving pivot unit (27, 27') and the unloading pivot unit (28, 28') comprise independently movable components, at least in some areas.

10. The root crop harvester according to claim 8 or 9, **characterised in that** both pivot units (27, 27'; 28, 28') each form modular component groups which are each secured in the area of the respective actuator component groups (25, 25'; 18, 18') thereof so as to be independently movable (arrow E, E'; G, G').

11. The root crop harvester according to any of claims 8 to 10, **characterised in that** the receiving pivot unit (27, 27') comprises an outer frame section (29, 29'), at least one guide roller (31, 31'), and a transfer belt (30, 30'), wherein said component group movable at least about a pivot axis (32, 32') that is arranged parallel to the longitudinal machine centre plane (M) of the machine (1) and that can be horizontally aligned.

12. The root crop harvester according to claim 11, **characterised in that** the receiving pivot unit (27, 27') is provided with a conveyor belt which is guided about pulleys (33, 33') in the area of a support frame comprising a plurality of frame sections (29, 29').

13. The root crop harvester according to claim 11 or 12, **characterised in that** the receiving pivot unit (27, 27') comprises more than one of the frame sections (29, 29') respectively, in the area of a multipart support frame.

14. The root crop harvester according to any of claims 11 to 13, **characterised in that** the receiving pivot unit (27, 27') comprises movable frame sections (29, 29') in the area of the support frame, such that, by pushing together, collapsing and/or folding the frame sections, the width (B) required for road travel can be generated.

15. The root crop harvester according to any of claims 8 to 10, **characterised in that** each separating device (14, 15) is provided in the area of the unloading pivot unit (28, 28') with at least one receiving belt (34, 34') extending parallel to the longitudinal machine centre plane (M) and a transfer belt (35, 35') associated therewith and embodied as a finger belt (FB), such that the harvested material (K, K') can be deflected in the direction of the common unloading conveyor (21).

16. The root crop harvester according to claim 15, **characterised in that** the receiving belt (34, 34') is provided with a guide roller (LW, LW') as a transverse conveyor at the unloading end, which roller deflects the partial stream to the transfer belt.

17. The root crop harvester according to claim 15 or 16, **characterised in that** the unloading conveyor (21) interacting with the unloading pivot unit (28, 28') in particular has a smaller conveying width than the leading screen belt (SB).

18. The root crop harvester according to any of claims 15 to 17, **characterised in that** the receiving belt (34, 34'), an intermediate belt (ZB) parallel thereto and the transfer belt (35, 35') acting as a transverse conveyor form the jointly movable pivot module.

19. The root crop harvester according to any of claims 1 to 18, **characterised in that** the conveyed mixture material (FT) moved upwardly in the area of the deflection conveying unit (10, 10') by means of a haulm belt (36) is movable downstream of the ascending conveying run along a horizontal over the separating devices (14, 15) of the deflection conveying unit (10, 10') and then the haulm belt (36) forms a return run (36'), which is deflected downwards substantially vertically.

20. The root crop harvester according to claim 19, **characterised in that** the haulm belt (36) and a screen belt (SB) are provided as a double-layered cleaning structure.

21. The root crop harvester according to claim 19 or 20, **characterised in that** the haulm belt (36) extends at least in the area of the ascending sorting stretch (ST) at a parallel distance from the screen belt (SB) forming the harvested material stream (FK).

22. The root crop harvester according to any of claims 19 to 21, **characterised in that** the return run (36') of the haulm belt (36) is guided in such a way that it passes through, at least in areas, a drop space (38) for the mixtures (T), which is formed by the deflection conveying unit (10, 10').

23. The root crop harvester according to any of claims 19 to 22, **characterised in that** the drop space (38) interacting with the haulm belt (36) defines a shaft area centrally positioned within the machine (1), the peripheral upper edge of which area is delimited by the component groups of the separating devices (14, 15).

24. The root crop harvester according to any of claims 19 to 23, **characterised in that** the at least one drop space (38) is positioned behind the deflection conveying unit (10, 10').

25. The root crop harvester according to any of claims 1 to 24, **characterised in that** in the area of the one or more deflection conveying units (10, 10') more than one or the two separating devices (14, 15) are provided.

26. The root crop harvester according to any of claims 1 to 25, **characterised in that** the deflection conveying unit (10) is provided with component groups that are active on one side of the longitudinal machine centre plane (M').

## Revendications

1. Récolteuse de plantes sarclées, qui est conçue sous la forme d'une arracheuse de pommes de terre en particulier automotrice ou d'une machine de nettoyage fixe qui comporte dans la région avant d'un bâti de machine (2) un dispositif d'arrachage (3) auquel est associé, en aval dans la direction de transport (F), une section de tri (ST) montante et ayant une largeur de travail (B) sensiblement inchangée et qui peut trier les mélanges de sorte que le produit de récolte (K, K') formés de plantes sarclées telles que des navets, des pommes de terre ou similaires puisse être acheminé en tant que produit transporté respectif à une trémie de collecte (4) ou un chargeur (5) par le biais d'au moins une section de nettoyage (RS), au moins un brin de transport (7, 7') déplaçable le long de la section de tri (ST) en partie montante étant guidé au moins jusqu'à une zone de décharge supérieure (AZ) puis le produit transporté respectif (K, T) pouvant être transféré sur au moins une section de transport en aval, le brin de transport respectif (7, 7') dans la région d'une extrémité d'évacuation supérieure (8, 9) coopérant avec au moins une unité de transport et de déviation supérieure (10, 10') recevant le flux de produit transporté (flèche FK) du produit de récolte (K) et cette unité de transport et de déviation supérieure formant au moins un flux de transport partiel (12, 12', 13) qui peut être déplacé sensiblement transversalement à la direction d'acheminement (FT, FK) du brin de transport respectif (7, 7'), **caractérisée en ce que** le flux de transport partiel (12, 12', 13) est conçu pour être acheminé à la région d'au moins un transporteur d'évacuation arrière (21), l'unité de transport et de déviation (10, 10') du système étant muni d'au moins un appareil de séparation (14, 15, 15') qui peut être déplacé dans la position de travail au moins d'un côté sur la largeur de réception (B) de la machine (1) jusque dans une largeur de projection latérale (AB) et qui peut être ramené depuis cette position jusque dans une position de roulement utilisable pour le transport sur route.

2. Récolteuse de plantes sarclées selon la revendication 1, **caractérisée en ce que** le dispositif d'arrachage (3) monté en amont de la section de nettoyage et de tri (RS, ST) est conçu avec une largeur de réception (B) correspondant sensiblement à celle destinée au transport sur route (1) de la machine (1).

3. Récolteuse de plantes sarclées selon la revendication 1 ou 2, **caractérisée** que le produit de récolte (K, K') préalablement nettoyé sur la section de tri (ST) et amené sur toute la largeur à au moins une bande de tamisage (SB) peut être distribué dans la région de deux unités de transporteur et de déviation (10, 10') sur deux appareils de séparation (14, 15) formant un flux partiel respectif.

4. Récolteuse de plantes sarclées selon l'une des revendications 1 à 3, **caractérisée en ce que** les flux partiels du produit de récolte (K, K') peuvent être déplacés, séparément des mélanges (D) situés dans la zone de décharge (AZ), sur des sections de transport partielles respectives (12, 13).

5. Récolteuse de plantes sarclées selon la revendication 3 ou 4, **caractérisée** les deux appareils de séparation (14, 15) de l'unité de transport et de déviation (10) forment des sections de transport partielles respectives (12, 13) dirigées vers l'extérieur et sensiblement opposées par rapport au plan médian longitudinal de machine (M) et ces sections de transport partielles coopèrent chacune avec au moins une section de tri qui s'étend en direction de la trémie de collecte (4) ou d'un chargeur (5) et qui peut orientée longitudinalement (19, 20) et transversalement (22, 23).

6. Récolteuse de plantes sarclées selon l'une des revendications 1 à 5, **caractérisée en ce que** les appareils de séparation (14, 15) recevant chacun un des flux partiels dans la région des deux sections de transport partielles (12, 13) sont intégrés dans le bâti de la machine (2) en tant que structures de composant agencées en image de miroir par rapport du plan médian longitudinal de machine (M) de la bande de tamisage amont (SB, SB').

7. Récolteur de plantes sarclées selon l'une des revendications 1 à 6, **caractérisée en ce qu'**au moins des sous-ensembles respectifs d'au moins un appareil de séparation côté bord (14, 15) de l'unité de transport et de déviation (10, 10') peut être déplacé au moyen d'au moins un ensemble de commande (25, 25') comportant un mécanisme de commande hydraulique ou électromoteur (24, 24').

8. Récolteuse de plantes sarclées selon l'une des revendications 1 à 7, **caractérisée en ce que** les appareils de séparation (14, 15) forment chacun un système en deux parties, ce système comportant une unité de réception pivotante amont (27, 27') et une unité d'évacuation pivotante aval (28, 28').

9. Récolteuse de plantes sarclées selon la revendication 8, **caractérisée en ce que** l'unité de réception pivotante (27, 27') et l'unité d'évacuation pivotante (28, 28') comportent des composants déplaçables de manière au moins partiellement autonome.

10. Récolteuse de plantes sarclées selon la revendication 8 ou 9, **caractérisée** que les deux unités pivotantes (27, 27' ; 28, 28') forment chacun des ensembles modulaire et ceux-ci sont maintenus chacun dans la région de leur ensemble de commande (25, 25' ; 18, 18') de manière déplaçable et autonome (flèche E, E' ; G, G').

11. Récolteuse de plantes sarclées selon l'une des revendications 8 à 10, **caractérisée en ce que** l'unité de réception pivotante (27, 27') comporte une section de cadre extérieure (29, 29'), au moins un rouleau de guidage (31, 31') et une bande de transfert (30, 30') et cet ensemble peut être déplacé au moins sur un axe de pivotement (32, 32') parallèle au plan médian longitudinal (M) de la machine (1) et orientable horizontalement.

12. Récolteuse de plantes sarclées selon la revendication 11, **caractérisée en ce que** l'unité de réception pivotante (27, 27') est munie d'une bande de transport, guidée par des rouleaux de déviation (33, 33'), dans la région d'un cadre de support comportant une pluralité de portions de châssis (29, 29').

13. Récolteuse de plantes sarclées selon la revendication 11 ou 12, **caractérisée en ce que** l'unité de réception pivotante (27, 27') comporte plus d'une des portions de cadre (29, 29') dans la région d'un cadre de support en plusieurs parties.

14. Récolteuse de plantes sarclées selon l'une des revendications 11 à 13, **caractérisée en ce que** l'unité de réception pivotante (27, 27') est munie de portions de cadre déplaçables (29, 29') dans la région du cadre de support de manière à pouvoir obtenir la dimension en largeur (B), requise pour le transport sur route (B), par rassemblement par coulissement, pliage et/ou rabattage.

15. Récolteuse de plantes sarclées selon l'une des revendications 8 à 10, **caractérisée en ce que** l'appareil de séparation (14, 15) est muni, dans la région de l'unité d'évacuation pivotante (28, 28'), d'au moins une bande de prise en charge (34, 34') s'étendant parallèlement au plan médian longitudinal de machine (M) et d'une bande de transfert (35, 35') associée à cette bande de prise en charge sous la forme d'une bande à doigts (FB) de manière à pouvoir dévier le produit de récolte (K, K') en direction du transporteur d'évacuation commun (21).

16. Récolteuse de plantes sarclées selon la revendication 15, **caractérisée en ce que** la bande de prise en charge (34, 34') est munie en tant que transporteur transversal, à l'extrémité d'évacuation, d'un rouleau de guidage (LW, LW) guidant le flux partiel vers la bande de transfert.

17. Récolteuse de plantes sarclées selon la revendication 15 ou 16, **caractérisée en ce que** le transporteur d'évacuation (21), coopérant l'unité d'évacuation pivotante (28, 28'), a en particulier une largeur de transport inférieure à celle de la bande de tamisage avant (SB).

18. Récolteuse de plantes sarclées selon l'une des revendications 15 à 17, **caractérisée en ce que** la bande de prise en charge (34, 34'), une bande intermédiaire (ZB) parallèle à celle-ci et la bande de transfert (35, 35') servant de transporteur transversal forment le module pivotant pouvant être déplacé conjointement.

19. Récolteuse de plantes sarclées selon l'une des revendications 1 à 18, **caractérisée en ce que** le produit de transport de mélange (FT), élevé dans la région de l'unité de transport et de déviation (10, 10') au moyen d'une bande pour fanes (36) peut ensuite être déplacé sur le brin de transport montant le long d'une sous-région horizontale par les appareils de séparation (14, 15) de l'unité de transport et de déviation (10, 10') et ensuite la bande pour fanes (36) forme un brin de retour (36') dévié sensiblement verticale vers le bas.

20. Récolteuse de plantes sarclées selon la revendication 19, **caractérisée en ce que** la bande pour fanes (36) et une bande de tamisage (SB) sont prévus sus la forme d'une structure de nettoyage à deux couches.

21. Récolteuse de plantes sarclées selon la revendication 19 ou 20, **caractérisée** que la bande pour fanes (36) s'étend, au moins dans la région de la section de tri montante (ST), parallèlement à distance de la bande de tamisage (SB) formant le flux de produit de récolte (FK).

22. Récolteuse de plantes sarclées selon l'une des revendications 19 à 21, **caractérisée en ce que** le brin de retour (36') de la bande pour fanes (36) est guidée de telle sorte que celle-ci traverse au moins en partie un espace de chute (38), destiné aux mélanges (T), qui est formé par l'unité de transport et de déviation (10, 10').

23. Récolteuse de plantes sarclées selon l'une des revendications 19 à 22, **caractérisée en ce que** l'espace de chute (38), coopérant avec la bande pour fanes (36), définit une région de puits qui est disposée centralement dans la machine (1) et dont le bord périphérique supérieur est délimité par les ensembles des appareils de séparation (14, 15) .

24. Récolteuse de plantes sarclées selon l'une des revendications 19 à 23, **caractérisée en ce que** l'au moins un espace de chute (38) est disposé en arrière de l'unité de transport et de déviation (10, 10').

25. Récolteuse de plantes sarclées selon l'une des revendications 1 à 24, **caractérisée en ce qu'**il est prévu dans la région d'au moins une unité de transporte et de déviation (10, 10') plus d'un appareil de séparation ou plus de deux appareils de séparation (14, 15).

26. Récolteuse de plantes sarclées selon l'une des revendications 1 à 25, **caractérisée en ce que** l'unité de transport et de déviation (10) est munie d'ensembles agissant d'un côté du plan longitudinal de machine (M').
